# EUROPEAN PATENT APPLICATION

(11) **EP 2 157 488 A2**
(43) Date of publication of application: **24.02.2010**
(21) Application number: 09167316.0
(22) Date of filing: 06.08.2009
(51) Int. Cl.: G05B 17/02

(54) **Systems and methods for simulating plant operations**

(30) Priority: 22.08.2008 US 196839
(71) Applicant: General Electric Company, Schenectady, NY 12345 (US)
(72) Inventor: Xu, Chunchun, Clifton Park, NY 12065 (US); Ritter, Allen Michael, Roanoke, VA 24014 (US); Smith, David, Daleville, VA 24083 (US); Garces, Luis Jose, Niskayuna, NY 12309 (US); Seymour, Robert Allen, Roanoke, VA 24018 (US); Shepard, Mark Eugene, Roanoke, VA 24018 (US); Nowak, James Michael, Roanoke, VA 24018 (US); Gerritsen, Bruce Allen, Salem, VA 24153 (US); Szczesny, Paul Michael, Clifton Park, NY 12065 (US)
(74) Representative: Bedford, Grant Richard

(57) **Abstract**

Embodiments of methods and systems of a system (100) for simulating a plant (104) are provided. According to one exemplary embodiment of the invention, there is disclosed a system (100) for simulating a plant (104). The system (100) may include a controller (102) including computer-executable instructions of plant operation logic for executing control commands to the plant (104). The system (100) may further include a simulator (106) in communication with the controller (102), where the simulator (106) may consist of a high bandwidth hardware (120) having at least one high bandwidth model (124) of at least a first plant behavior. The simulator (106) may also consist of at least one processor (122) with at least one low bandwidth model (128) of at least a second plant behavior.

## Description

This invention relates generally to hardware simulation and more specifically, to providing systems and methods for simulating plant operations.

Control systems of a plant are often tested against a simulated plant model. The use of the simulated plant model may be motivated by factors of cost and safety. Testing on the real plant or a prototype is costlier due to the actual hardware components required. Software models of the components of the real plant are generally cheaper and easier to handle for repeated simulations of the real plant. Moreover, the behavioral response of the control system under certain test conditions may lead to a failure of one or more components of the real plant, thus putting the safety of the plant at stake. In addition to the advantages of low cost and greater safety, the simulated plant model also offers flexibility in testing the system at borderline conditions without damaging the real plant. This interfacing of the control system with the simulated plant model through a set of input-output ("I/O") commands for simulating responses of the control system may be referred to as Hardware-In-The-Loop ("HIL") simulation.

Typically, the control system includes a controller that runs at real time. However, the simulated I/Os to the controller and the simulated plant model may not operate in real time. As a result, the responses provided by the plant model to the controller may not match the frequencies in which the controller operates. Therefore, the HIL simulation may diverge from the actual response of the controller with a real plant.

The I/O access time coupled with the model computational time may introduce a delay in the closed loop response of the controlled plant. Furthermore, commercially available software modeling packages used for simulating plant models have response times that do not minimize the latency for certain modeling demands.

Accordingly, there exists a need for systems and methods for simulating plant operations that reduces the response times and latency in the plant model and for making the plant model more applicable for real-time or near real-time simulation. There further exists a need for a system with provisions for performing both high speed and low speed simulations based on the requirements of the plant.

According to one exemplary embodiment of the invention, there is disclosed a system for simulating a plant. The system may include a controller including plant operation logic for executing control commands to the plant. The system may further include a simulator in communication with the controller, which may consist of high bandwidth hardware having at least one high bandwidth model of at least a first plant behavior. The controller may also consist of at least one processor with at least one low bandwidth model of at least a second plant behavior.

According to another exemplary embodiment of the invention, there is disclosed a method for simulating a plant. The method may include providing a controller containing plant operation logic for executing control commands to the plant. The method may further include providing a simulator in communication with the controller. The controller, in communication with the simulator, may contain high bandwidth hardware and at least one processor. The method may further include modeling by the high bandwidth hardware a high bandwidth model of at least a first plant behavior. Further, the at least one processor in the controller may model a low bandwidth model of at least a second plant behavior. The method may yet further include transmitting at least one control command from the controller to the simulator, and receiving, at the controller from the simulator, at least one response to the at least one control command responsive at least in part to transmitting the control command and based at least in part on at least one of the high bandwidth model or the low bandwidth model.

According to yet a further exemplary embodiment of the invention, there is disclosed a system for simulating a plant. The system may include a controller with plant operation logic for executing control commands to the plant. The system may also include a simulator in communication with the controller. The controller may include at least one field programmable gate array consisting of at least one high bandwidth model of at least a first plant behavior and at least one processor consisting of at least one low bandwidth software model of at least a second plant behavior. Moreover, the controller and the simulator may be in communication via at least one serial link, through which the controller is operable to transmit at least one control command or diagnostic command to the simulator. The simulator may also use the serial link to deliver to the controller at least one response to the control command or the diagnostic command responsive at least in part to the control command or the diagnostic command and based at least in part on at least one of the high bandwidth model or the low bandwidth model.

Various embodiments, aspects, and features of the invention will become apparent to those skilled in the art from the following detailed description, the accompanying drawings, and the appended claims.

Having thus described the invention in general terms, reference will now be made to the accompanying drawings, which are not necessarily drawn to scale, and wherein:
FIG. 1 is a schematic representation of an example plant simulation system illustrating an interface between a controller and a real-time simulated plant model, in accordance with one example embodiment of the invention;
FIG. 2 is a flowchart illustrating one example of a method for simulating a plant model in real time, according to one example embodiment of the invention.

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are methods and systems for real-time simulation of a plant, such as by a Hardware-In-The-Loop ("HIL") system. According to one example embodiment of the invention, a controller is interfaced with a simulator/plant model of the system. The controller may include separate dedicated hardware components for performing high-speed tasks in real-time or near real-time, and general-purpose low speed tasks. The high bandwidth hardware may include a built-in Field Programmable Gate Array ("FPGA") or an Application Specific Integrated Circuit ("ASIC"), and may perform the tasks on the hardware itself. However, the general-purpose low speed tasks may be performed by a low bandwidth firmware in a processor of the controller. The controller is further linked to a simulator that simulates the plant. The configuration of the simulator may be mirror image of the controller. The simulator may include a high bandwidth hardware with a built-in FPGA or ASIC. The FPGA or the ASIC may include a high bandwidth model for performing simulations in real-time or near real-time. The simulator may further include a processor with a low bandwidth model for performing general-purpose low speed simulations. In response to a control or diagnostic command from the controller, the simulator may perform the simulations at least in one of the high bandwidth model or the low bandwidth software model, depending on the at least a first plant behavior or a second plant behavior. Thus, the systems and methods allow coordinating the timing execution of the different parts of the combined high bandwidth and low bandwidth models to be able to operate as close to real time as possible.

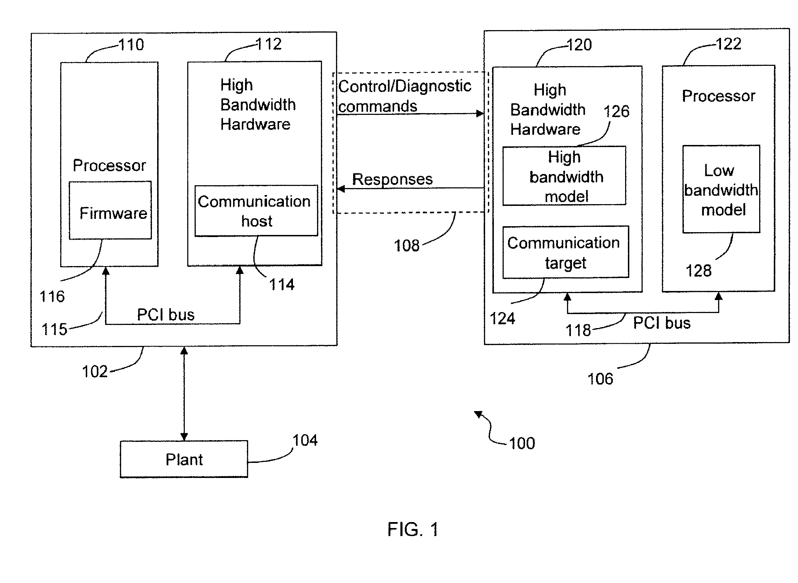

FIG. 1 is a schematic representation of an example plant simulation system 100 illustrating an interface between a controller 102 and a real-time simulated plant model. Further, FIG. 1 illustrates an example embodiment of the invention, where the controller 102 may be linked to at least one simulator 106 by a serial link 108. In an example embodiment, the serial link 108 may be a High Speed Serial Link ("HSSL"). The HSSL facilitates high speed communication between the controller 102 and the simulator 106. Further, the serial link 108 may be used for transmitting at least one control or diagnostic command from the controller 102 to the simulator 106. Similarly, responses from the simulator 106 to the controller commands may also be communicated to the controller 102 through the serial link 108.

Referring to the FIG. 1, the controller 102 may include two main hardware components: a processor 110 and a high bandwidth hardware 112. In an example embodiment, the high bandwidth hardware 112 in the controller 102 may act as a communication host 114. The processor 110 and the high bandwidth hardware 112 may include computer-executable instructions of plant operation logic for executing control commands to the plant 104 and to the simulator 106. The high bandwidth hardware 112 may be configured for real-time operation of the controller 102 and the processor 110 may be configured for low speed or pseudo real-time operation based on behavior of the plant 104. In an example embodiment of the invention, the high bandwidth hardware 112 may include an FPGA, while the processor 110 may at least include a firmware 116. The processor 110 and the high bandwidth hardware 112 may communicate with each other through a high speed digital communication bus 118. In an example embodiment of the invention, the high speed digital communication bus 115 may be a Peripheral Component Interconnect ("PCI") bus.

The simulator 106, which is linked to the controller 102, may also include two components: a high bandwidth hardware 120 and a processor 122. In an example embodiment, the high bandwidth hardware 120 in the simulator 106 may act as a communication target 124. The high bandwidth hardware 120 may be a part of an I/O board, (not shown in the figure) and may include at least one FPGA implementing a high bandwidth model 126 for at least a first plant behavior. In an example embodiment of the invention, the first plant behavior may be at least one of an electrical behavior, thermal behavior, chemical behavior, or a mechanical behavior, which may be real-time or near real-time in nature. The high bandwidth model 126 implemented in the FPGA may store logic for simulating the real-time or near real-time plant behavior. In example embodiments, to reduce latency, the sampling rates in real-time or near real-time simulations may be in the order of nanoseconds, such as approximately 50-100 nanoseconds in one example. While conventional processor designs operate sequentially on a set of instructions, FPGA processors can perform operations in parallel. Therefore, FPGA are well suited for fast simulation by reducing the latency present in software models. Thus, high speed simulations may be implemented on the FPGA card.

Accordingly, in the proposed configuration, FPGA based real-time simulation of the plant may be performed by locating the plant computational tasks just besides the I/O on the same FPGA card. The arrangement allows for FPGA target code to be included as part of a larger real-time simulation model. C code and FPGA Hardware Description Language ("HDL") code may be executed in the FPGA card. In another embodiment, the FPGA card may be replaced by an ASIC for implementing real-time or near real-time simulations.

However, under different test conditions, the plant model may behave differently. In an example embodiment, the general purpose low speed tasks of the simulator 106, which do not require a real-time operation, may be performed in the processor 122. Further, in an example embodiment of the invention, the second plant behavior may essentially not require computations/tasks to be performed in real-time, or tasks requiring a lower processing bandwidth, and hence may be performed in the processor 122. Further, the processor 122 may consist of a low bandwidth model 128 which may include at least one software-simulated model of the second plant behavior. The software-simulated model may use software packages like MATLAB, Simulink, Saber and Opal-RT to perform general purpose low speed simulations. In an embodiment of the invention, examples of general purpose low speed tasks may at least include temperature control in an household air conditioner, speed control in an electric motor, position control in a Permanent Magnet Synchronous Motor ("PMSM"), or any control action which does not require the control action to be completed as quickly or responsively as certain high bandwidth modeling requirements. In one example, the low bandwidth model may have sampling rates on the order of 10-100 microseconds. Further, in an example embodiment of the invention, the second plant behavior may be at least one of a mechanical speed, an electrical field, a wind velocity, or a flow, for example. The dedicated high speed digital communication bus 118 between the high speed and the low speed units coordinates the data communication and performs sequencing of the simulations. After the low speed simulations are implemented in the processor 122, the feedback is channeled through the high speed digital communication bus 118 and the high bandwidth hardware 120 to the controller 102.

High speed simulations have applications in various fields. Some examples of applications using FPGA (or other high bandwidth hardware) based simulation are a wind turbine, a gas line pumping station, an oil reserve pumping station, a gas compressor, a PV or Fuel cell power generator that could include a motor, a power bridge, a link capacitor, an electrical transformer, a filter, a mechanical gear, a circuit card, the controller's I/O, and many other electrical and/or mechanical components.

A broad example of an application for real-time or near real-time simulations may be a wind turbine in a wind farm. Wind farms typically consist of a plurality of wind turbines in the same location, and are used for production and supply of electric power to a power grid. A large wind farm may consist of a few dozen to about hundred individual wind turbines interconnected with a medium voltage power grid. Various wind turbine and/or wind farm behaviors may be simulated and/or controlled responsive to simulating such behaviors, such as wind farm grid behaviors, grid connects, dispatch, and power fluctuation control. In one example, voltage fluctuation in wind turbines may be a concern because wind turbines produce power dependent on the variations of the wind speed, injecting the power without conditioning into the power grid. Voltage fluctuations may affect the sensitivity of the electronic equipment, thus leading to a reduction in the life span of most equipment.

Thus during testing of the controller under different test conditions, the controller may benefit from real-time feedback/responses from a plant modeling the behavior of variable speed generators (or other wind turbine or wind farm behaviors), so as to accurately trace the behavior of the controller. The control or diagnostic commands issued by the controller based at least in part on the feedback/responses provided by the plant model, may be implemented at least in part on a simulator of the wind turbine system or at least constituent components. Accordingly, the controller and the simulator/plant model in the wind turbine system may be arranged in the same way as the controller 102 and the simulator 106 shown in FIG. 1, where the high bandwidth hardware 120 implements the high speed simulations and other high bandwidth behaviors. For low wind speeds and/or lower bandwidth behaviors, the feedback/responses may not be real-time and may be simulated in the low speed processor 122 of the simulator 106.

In another example, a wind pulse width modulator ("PWM") converter or amplifier connected to a grid may be simulated. The PWM converter has to operate the power switches with a timing resolution in the order of 50-100 nanoseconds, which can be easily modeled using HDL language in an FPGA, or in other high bandwidth hardware. The output of the converter, namely currents and voltages are sent back to the hardware controller as feedback signals to close the appropriated loops. These signals can also be used within the same FPGA, or other high bandwidth hardware, to model the generator or to model part of the grid (such as transformer and line filters). The sampling time required to represent these components could be in the order of 50-250 microseconds depending on the rating of the converter. The modeled system would then be able to sufficiently simulate most of the drive dynamic within the bandwidth of interest (approximately ∼3000 Rad/sec. for the current and torque loop, approximately ∼1000Rad/sec. for the frequency loop and lower bandwidth for the rest of the controlled variables, in one example).

In another example of low bandwidth modeling, a low bandwidth thermal model of the power amplifier, such as the PWM converter described above, can be used to determine the limit for the maximum current as a function of the power device temperatures. In this example, this low bandwidth model could operate at sampling rates in the 10-100 microseconds, which would be well within the sampling time of the controller.

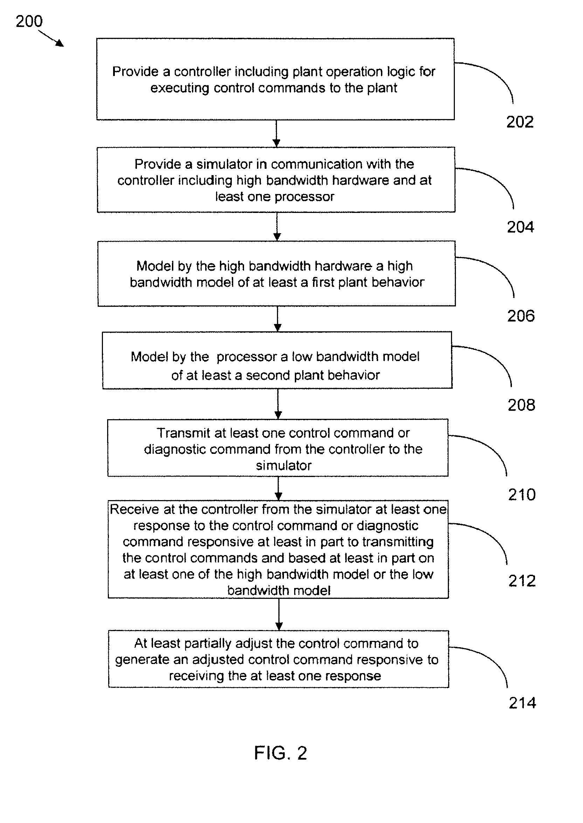

FIG. 2 is a flowchart illustrating one example of a method 200 for simulating a plant model in real time, according to one example embodiment of the invention.

The example method begins at block 202. At block 202, a controller containing computer executable instructions of plant operation logic for executing control commands to the plant is provided. The controller may use algorithms for issuing control commands to a plant, where the algorithm may at least partially decide the control commands to be issued to the plant under different test conditions.

Following block 202 is block 204, in which a simulator in communication with the controller is provided, which includes a high bandwidth hardware, such as an FPGA or ASIC, for example, and at least one processor, which may be low bandwidth hardware, and may optionally include low bandwidth software. The simulator simulates the plant under different test conditions and/or plant behaviors. According to the behavior of the plant, the simulator processes the data at least in one of the high bandwidth hardware or the low bandwidth hardware, such as the processor.

Following block 204 is block 206, in which a high bandwidth model of a first plant behavior is modeled in the high bandwidth hardware. The first plant behavior under the test conditions may be at least one of electrical or mechanical behavior and may require high speed response/simulation. The high bandwidth hardware consists of a high bandwidth model, which may facilitate parallel processing of data, thus significantly reducing latency and enabling real-time or near real-time simulation of the plant model. The high bandwidth hardware may be one or more FPGA or ASIC cards, to facilitate such high speed simulations by generation of auto code, and implementation of the simulations on the hardware itself, thus reducing the latencies associated with the plant model to the order of nanoseconds.

Following block 206 is block 208, in which a low bandwidth model of a second plant behavior is modeled in the processor. The second plant behavior under the test conditions may be at least one of a mechanical speed, an electric field, a wind velocity, or a flow, for example, and may only demand low speed response/simulation. Software modules containing commercially available flexible software packages may be present in the processor for performing such general purpose low speed simulations. In one embodiment, the high bandwidth hardware and the low bandwidth hardware on the simulator may communicate through a PCI bus.

Following block 208 is block 210, in which at least one control or diagnostic command is transmitted from the controller to the simulator. The controller sends commands to the simulator, based on which simulations are implemented in the simulator by one or both of the high bandwidth model and the low bandwidth model. The simulations result in a feedback which is then fed back into the controller.

Following block 210 is block 212, in which at least one response from the simulator is received at the controller, based partly on the commands sent by the controller, and partly on the high bandwidth or the low bandwidth model at which the plant operation logic is executed. The feedback generated in the simulator is a function of both the control command sent by the controller and the plant operation logic being implemented by one or both of the high bandwidth model and the low bandwidth model in the simulator. The transmissions between the controller and the simulator may be over a serial link, such as a HSSL.

Following block 212 is block 214, in which the controller generates an adjusted control command based on the response received from the simulator. The feedback from the simulator is fed to the controller, and the ensuing control or diagnostic command generated by the controller may be a function of at least one response/feedback received from the simulator. The adjusted control command may be used to control the plant, or to illustrate plant behavior and controller behavior as if in operation.

Embodiments of the invention are described above with reference to block diagrams and schematic illustrations of methods and systems according to embodiments of the invention. It will be understood that each block of the diagrams, and combinations of blocks in the diagrams can be implemented by computer program instructions. These computer program instructions may be loaded onto one or more general purpose computers, special purpose computers, or other programmable data processing apparatus to produce machines, such as the controller 102 described with reference to FIG. 1, such that the instructions which execute on the computers or other programmable data processing apparatus create means for implementing the functions specified in the block or blocks. Such computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks.

The methods and systems described herein have the technical effect of providing real-time or near real-time simulation of a plant. The methods and systems create further technical effects of achieving separated high speed and/or high bandwidth simulations and low speed and/or low bandwidth simulations of a plant. The use of dedicated hardware to perform real-time or near real-time simulations creates the technical effect of reducing the need for customized software modules, thus cutting down on the latency and providing improved real-time simulation for various applications.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose the invention, including the preferred mode, and also to enable any person skilled in the art to practice the invention, including making and using any devices or systems and performing any incorporated methods. The patentable scope the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system for simulating a plant, comprising:
   a controller comprising plant operation logic for executing control commands to the plant; and
   a simulator in communication with the controller, wherein the simulator comprises:
      high bandwidth hardware comprising at least one high bandwidth model of at least a first plant behavior; and
      at least one processor comprising at least one low bandwidth model of at least a second plant behavior.
2. The system of clause 1, wherein the high bandwidth hardware comprises at least one field programmable gate array comprising the at least one high bandwidth model.
3. The system of any preceding clause, wherein the at least one low bandwidth model comprises at least one software-simulated model of the second plant behavior.
4. The system of any preceding clause, wherein the first plant behavior comprises at least one of electrical behavior, thermal behavior, chemical behavior, or mechanical behavior.
5. The system of any preceding clause, wherein the second plant behavior comprises at least one of a mechanical speed, an electrical field, a wind velocity, or a flow.
6. The system of any preceding clause, wherein the controller and the simulator communicate by at least one serial link.
7. The system of any preceding clause, wherein the simulator further comprises at least one high speed digital communication bus operable to facilitate communications between the high bandwidth hardware and the at least one processor.
8. The system of any preceding clause, wherein the controller is operable to transmit at least one control command or diagnostic command to the simulator and
   wherein the simulator is operable to deliver to the controller at least one response to the control command or the diagnostic command responsive at least in part to the control command or the diagnostic command and based at least in part on at least one of the high bandwidth model or the low bandwidth model.
9. The system of any preceding clause, wherein the plant comprises mechanical or electrical components of at least one of: a wind turbine, a gas line pumping station, a oil reserve pumping station, a gas compressor, a generator, a motor, a power bridge, a link capacitor, an electrical transformer, a filter, a mechanical gear, or the controller's I/O.
10. A method for simulating a plant, comprising:
   providing a controller comprising plant operation logic for executing control commands to the plant;
   providing a simulator in communication with the controller comprising high bandwidth hardware and at least one processor;
   modeling by the high bandwidth hardware a high bandwidth model of at least a first plant behavior;
   modeling by the least one processor a low bandwidth model of at least a second plant behavior;
   transmitting at least one control command from the controller to the simulator; and
   receiving at the controller from the simulator at least one response to the at least one control command responsive at least in part to transmitting the control command and based at least in part on at least one of the high bandwidth model or the low bandwidth model.
11. The method of clause 10, further comprising transmitting at least one diagnostic command from the controller to the simulator and receiving at the controller from the simulator at least one response to the at least one diagnostic command responsive at least in part to transmitting the at least one diagnostic command and based at least in part on at least one of the high bandwidth model or the low bandwidth model.
12. The method of clause 10 or 11, further comprising at least partially adjusting the at least one control command to generate an adjusted control command responsive to receiving the at least one response, and at least partially controlling the plant based at least partially on the adjusted control command.
13. The method of any one of clauses 10 to 12, wherein modeling by the high bandwidth hardware at least a first plant behavior comprises modeling at least one of electrical behavior or mechanical behavior.
14. The method of any one of clauses 10 to 13, wherein modeling by the at least one processor at least a first plant behavior comprises modeling at least one of a mechanical speed, an electrical field, a wind velocity, or a flow.
15. The method of any one of clauses 10 to 14, wherein the high bandwidth hardware comprises at least one field programmable gate array or application specific integrated circuit, and further comprising storing logic representing the high bandwidth model of the first plant behavior in the field programmable gate array or application specific integrated circuit.
16. The method of any one of clauses 10 to 15, wherein modeling by the least one processor a low bandwidth model of at least a second plant behavior comprises simulating with software the second plant behavior.
17. The method of any one of clauses 10 to 16, wherein transmitting at least one control command from the controller to the simulator and receiving at the controller from the simulator at least one response comprises communicating at least partially over at least one serial link.
18. The method of any one of clauses 10 to 17, further comprising communicating at least partially over at least one PCI bus between the high bandwidth hardware and the at least one processor.
19. The method of any one of clauses 10 to 18, wherein the plant comprises mechanical or electrical components of at least one of: a wind turbine, a gas line pumping station, a oil reserve pumping station, a gas compressor, a generator, a motor, a power bridge, a link capacitor, an electrical transformer, a filter, a mechanical gear, or a circuit card.
20. A system for simulating a plant, comprising:
   a controller comprising plant operation logic for executing control commands to the plant; and
   a simulator in communication with the controller comprising:
      at least one field programmable gate array comprising at least one high bandwidth model of at least a first plant behavior; and
      at least one processor comprising at least one low bandwidth software model of at least a second plant behavior;
wherein the controller and the simulator are in communication via at least one serial link; and
wherein the controller is operable to transmit at least one control command or diagnostic command to the simulator, and wherein the simulator is operable to deliver to the controller at least one response to the control command or the diagnostic command responsive at least in part to the control command or the diagnostic command and based at least in part on at least one of the high bandwidth model or the low bandwidth model.

## Claims

1. A system (100) for simulating a plant (104), comprising:
a controller (102) comprising plant (104) operation logic for executing control commands to the plant (104); and
a simulator (106) in communication with the controller (102), wherein the simulator (106) comprises:
high bandwidth hardware (112) comprising at least one high bandwidth model (126) of at least a first plant behavior; and
at least one processor (110) comprising at least one low bandwidth model (128) of at least a second plant behavior.

2. The system (100) of claim 1, wherein the high bandwidth hardware (112) comprises at least one field programmable gate array comprising the at least one high bandwidth model (126).

3. The system (100) of any preceding claim, wherein the at least one low bandwidth model (126) comprises at least one software-simulated model of the second plant behavior.

4. The system (100) of any preceding claim, wherein the first plant behavior comprises at least one of electrical behavior, thermal behavior, chemical behavior, or mechanical behavior.

5. The system (100) of any preceding claim, wherein the second plant behavior comprises at least one of a mechanical speed, an electrical field, a wind velocity, or a flow.

6. The system (100) of any preceding claim, wherein the controller (102) and the simulator (106) communicate by at least one serial link (108).

7. The system (100) of any preceding claim, wherein the simulator (106) further comprises at least one high speed digital communication bus (115) operable to facilitate communications between the high bandwidth hardware (112) and the at least one processor (110).

8. The system (100) of any preceding claim, wherein the controller (102) is operable to transmit at least one control command or diagnostic command to the simulator (106) and wherein the simulator (106) is operable to deliver to the controller (102) at least one response to the control command or the diagnostic command responsive at least in part to the control command or the diagnostic command and based at least in part on at least one of the high bandwidth model(126) or the low bandwidth model (128).

9. The system (100) of any preceding claim, wherein the plant (104) comprises mechanical or electrical components of at least one of: a wind turbine, a gas line pumping station, a oil reserve pumping station, a gas compressor, a generator, a motor, a power bridge, a link capacitor, an electrical transformer, a filter, a mechanical gear, or the controller's (102) I/O.

10. A method (220) for simulating a plant (104), comprising:
providing (202) a controller (102) comprising plant operation logic for executing control commands to the plant (104);
providing (204) a simulator (106) in communication with the controller (102) comprising high bandwidth hardware (112) and at least one processor (110);
modeling (206) by the high bandwidth hardware(112) a high bandwidth model (126) of at least a first plant behavior;
modeling (208) by the least one processor (110) a low bandwidth model (128) of at least a second plant behavior;
transmitting (210) at least one control command from the controller (102) to the simulator (106); and
receiving (212) at the controller (102) from the simulator (106) at least one response to the at least one control command responsive at least in part to transmitting the control command and based at least in part on at least one of the high bandwidth model (126) or the low bandwidth model (128).
